# EUROPÄISCHE PATENTSCHRIFT

(11) **EP 0 529 324 B1**
(45) Veröffentlichungstag und Bekanntmachung des Hinweises auf die Patenterteilung: **02.12.1998**
(21) Anmeldenummer: 92112779.1
(22) Anmeldetag: 27.07.1992
(51) Int. Cl.: G01N 21/71, F23N 5/00, F23N 5/08, G01J 1/04

(54) **Einrichtung zum Nachweis der Anwesenheit und der Güte einer Flamme durch Erfassung von elektromagnetischen Strahlungen**
Device for detecting the presence and the quality of a flame by detection of electromagnetic radiations
Dispositif d'identification de la présence et de la qualité d'une flamme par la détection de radiations électromagnétiques

(30) Priorität: 27.08.1991 IT MI912292
(43) Veröffentlichungstag der Anmeldung: 03.03.1993
(73) Patentinhaber: SIE SYSTEMS S.P.A., 20016 Pero (Milano) (IT)
(72) Erfinder: Montagna, Giovanni, Dott. Ing., Milano (IT)
(74) Vertreter: Jaumann, Paolo

(56) Entgegenhaltungen:
- WO-A-86/04664
- WO-A-89/12774
- WO-A-92/10705
- DE-A- 4 025 909
- US-A- 4 037 113
- US-A- 4 709 155
- US-A- 4 983 853

## Beschreibung

Die vorliegende Erfindung betrifft eine Einrichtung zum Nachweis der Anwesenheit und der Güte einer Flamme durch Erfassung und Auswertung von elektromagnetischen Strahlungen verschiedener Wellenlänge.

Vorrichtungen, die den Nachweis der Anwesenheit einer Flamme ermöglichen sind bekannt, z. Bsp. aus der WO-A-89/12774 und aus der DE-A-4025909.

In der WO-A-89/12774 ist eine Vorrichtung beschrieben, die den Nachweis der Anwesenheit einer Flamme ermöglicht, unter Verwendung eines Phosphor-Wandlers und einer Photodiode für optische Strahlungen. Die Konstruktion des UV-Sensor Moduls ist hauptsächlich für Flugzeugmotoren gedacht.

In der DE-A-4025909 wird eine Vorrichtung zur optischen Überwachung von Hochtemperaturreaktoren beschrieben, dadurch gekennzeichnet, daß ein Bündel von Lichtleitfasern angeordnet ist, das mit einer ebener Stirnseite dem Innenraum zugewendet ist.

Gemäß vorliegender Erfindung wird eine Einrichtung zum Nachweis der Anwesenheit und der Güte einer Flamme vorgeschlagen, bestehend im wesentlichen aus
1. einem Erfassungs- und Bündelungselement (11) für die elektromagnetischen Strahlungen der Flamme, bestehend aus einem Linsensystem und einer entsprechenden Halterung,
2. einem Übertragungs- und Trennelement (12) für die Strahlungen, bestehend aus einer Strahlungseingangsstelle (121), einem Lichtleitfaserbündel (122) und einer Ausgangs- und Trennstelle (123),
3. einem mit dem soeben genannten Element intergrierten Element zur Abdichtung der Brennkammer gegenüber der elektrischen Schaltung der Einrichtung, bestehend aus derselben mit flüssigem ausgehärteten Bindemittel ausgegossenen Ausgangs- und Trennstelle (123),
4. einem in einem metallischen Behälter (14) enthaltenen Element zur Messung und Auswertung der erfassten Strahlungen (13), bestehend aus entsprechenden Sensoren und elektronischen Schaltungen.

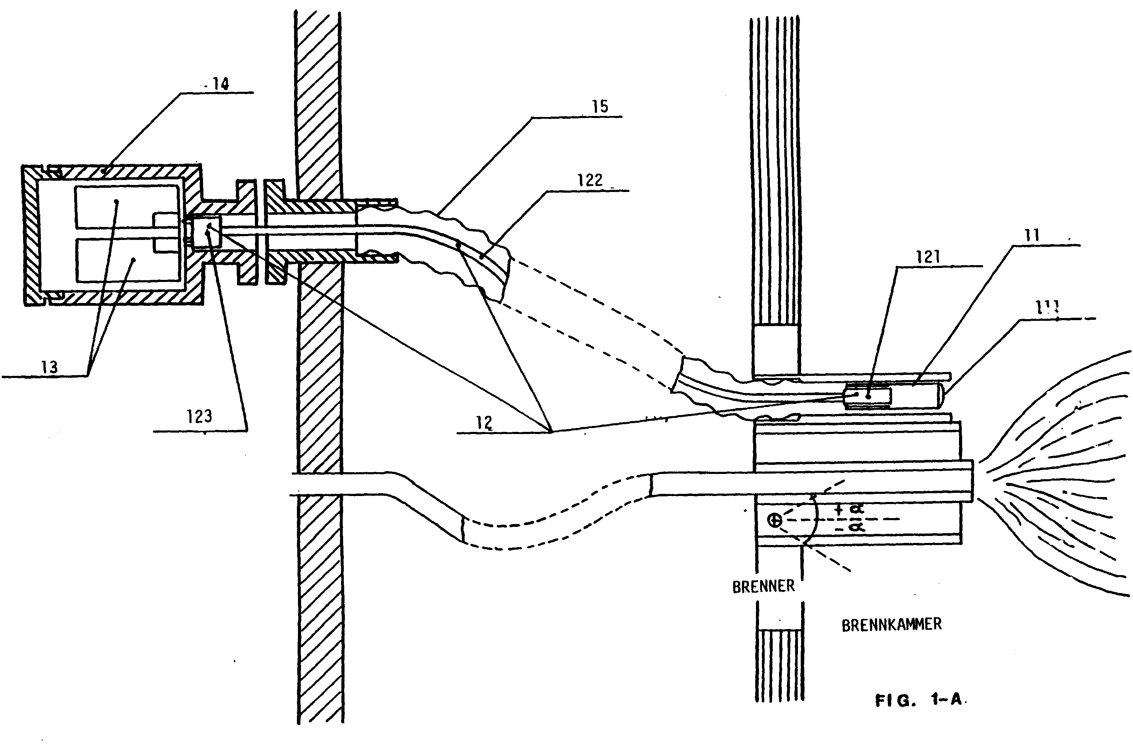

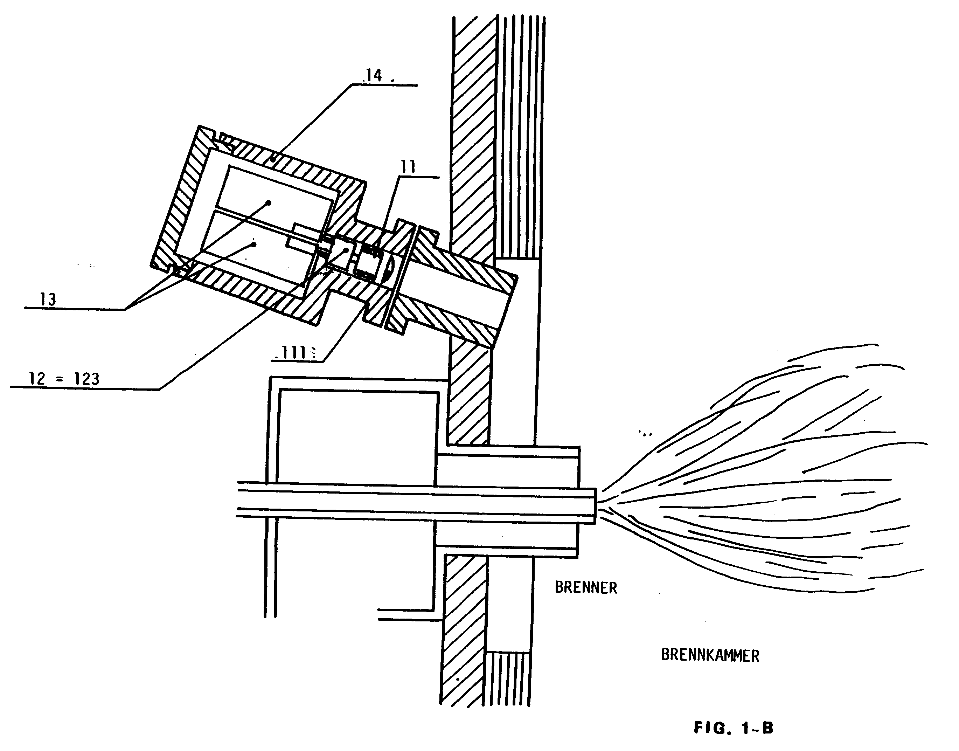

In Abhängigkeit von der Ausbildung und den Raumverhältnissen der Brenn= kammer kann es notwendig sein, das Erfassungselement (11) in unmittel= barer Nachbarschaft der Flamme im Inneren der Brennkammer anzuordnen (Fig. 1-A).

In einem solchen Fall weist das Übertragungs- und Trennelement eine entsprechende Länge auf (Einrichtung in gestreckter Ausführung) und enthält alle obengenannte Bestandteile.

In anderen Fällen (Fig. 1-B) kann das Erfassungselement (11) von der Flamme entfernt angeordnet sein und dementsprechend kann das Über= tragungs- und Trennelement eine minimale Länge aufweisen (Einrichtung in gedrängter Ausführung) und alle obengenannten Bestandteile, werden in der Ausgangs- und Trennstelle (123) vereinigt.

Bei der Einrichtung in gestreckter Ausführung wird das Erfassungs= element am Körper des Brenners angebracht und das typische Einrichtungs= schema ist in Fig. 1-A wiedergegeben; darin bezeichnen 11 das Erfas= sungselement und 12 das Übertragungselement, welches sich aus der Ein= gangsstelle 121, der Trennstelle 123 und dem dazwischenliegenden Bündel 122 zusammensetzt, das mit einem biegsamen Mantel 15 versehen ist, und zu einem Behälter 14 führt, in welchem die Sensoren und die dazu= gehörigen Verstärkerschaltungen 13 enthalten sind.

Die Einrichtung in gedrängter Ausführung wird unmittelbar an der Wand der Brennkammer angebracht und das typische Einrichtungsschema ist in Figur 1-B wiedergegeben, wo das Erfassungs- und Bündelungselement 11 sich ersichtlich in unmittelbarer Nachbarschaft der Ausgangs- und Trennstelle 123 befindet, welche hier auch die Aufgaben der Eingangs= stelle und des Übertragungselementes übernimmt.

Der Erfindung liegen folgende Aufgaben zugrunde:
- Erfassung durch die Flamme eines Brenners emittierter Strahlungen mit Hilfe eines in der Nähe der Flamme angeordneten optischen Ele= mentes, bei Betriebstemperaturen von etwa 300°C und bei einer Spitzen= temperatur von 450°C;
- Fernübertragung der Strahlungen über ein Faserbündel, so dass eine Übertragung elektromagnetischer Strahlungen mit optimalem Wirkungs= grad in Abhängigkeit von der gewünschten Wellenlänge erzielt wird;
- Trennung von Strahlungen verschiedener Wellenlänge durch eine Kombi= nation von unterschiedlichen Lichtleitfasern und/oder optischen Fil= tern und/oder Sensoren, die für verschiedene Wellenlängenbereiche ausgelegt sind;
- Aufnahme der Strahlungen verschiedener Wellenlänge gesondert an getrennten Sensoren, die in der Lage sind, die Energieausstrahlung der Flamme in den verschiedenen Bereichen der Wellenlänge und der Modulation auszuwerten;
- vergleichende Auswertung der Strahlungen mit verschiedenen Wellen= längen und verschiedenen Modulationsfrequenzen, zum Nachweis der Anwesenheit und der Güte der Flamme, sowie der eventuellen Abweichung von der optimalen Güte.

Zur Erfullung der genannten Aufgaben weist die eingangserwähnte Ein= richtung erfindungsgemäss nachstehende kennzeichnenden Merkmale auf:
- das Erfassungselement besteht im wesentlichen in einer Sammellinse, welche die zur Bewertung der Verbrennung dienenden Nutzstrahlungen im Bereich ihres Brennpunktes bündelt; in diesem Brennpunkt ist das Eingangskopfstück eines das Übertragungs- und Trennelement bildenden Lichtleitfaserbündels angeordnet und fixiert;
- das Übertragungs- und Trennelement ist durch Lichtleitfasern gebildet, deren Strahlungsausbeuten den zur Auswertung bestimmten Wellenlängen angepasst sind, wobei diese Lichtleitfasern am ausgangsseitigen Ende in einem Trennelement voneinander getrennt sind;
- das Trennelement besitzt Mittel für die mechanische Fixierung der Fasern, für deren Führung zu den strahlungsempfindlichen Sensoren und für die abgedichtete Trennung der Brennkammer von der elektrischen Schaltung der Einrichtung.

Diese und weitere den Patentansprüchen entnehmbaren Merkmale werden nachstehend unter Bezugnahme auf die beiliegenden schematischen Zeich= nungen anhand eines Ausführungsbeispiels für die Erfindung, auf welches letztere nicht beschränkt ist, näher erläutert.

In den Zeichnungen zeigen:
- Figur 1-A und 1-B: die bereits weiter oben beschriebenen schematischen Ausführungen der Einrichtung,
- Figur 2: ein Beispiel für das erfindungsgemässe Erfassungselement,
- Figur 3: eine Einzelheit des erfindungsgemässen Eingangskopfstückes des Lichtleitfaserbündels,
- Figur 4: ein erfindungsgemässes Trennelement,
- Figur 5: die Verwendung des Trennelementes zum Absperren der aus dem Inneren der Brennkammer herrührenden Brenngase (51 = Ein= richtung in gestreckter Ausführung; 52 = Einrichtung in ge= draengter Ausfuehrung).

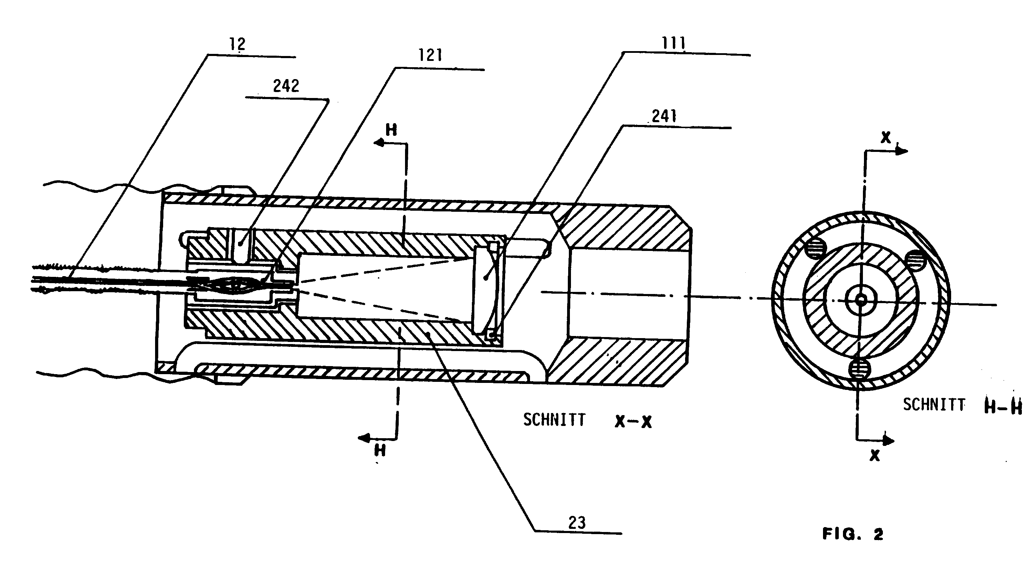

Das in der Nähe der Flamme angeordnete Erfassungselement 11 für die Strahlungen ist im Ausführungsbeispiel in Fig. 2 näher dargestellt. Es besteht im wesentlichen aus zwei Teilen:
- einer Sammellinse 111, deren Fläche die Aufnahme einer gewünschten Energiemenge ermöglicht und deren Wölbung derart ausgelegt ist, dass die Linse, unter Berücksichtigung der Aberration, sämtliche der Be= wertung der Verbrennung dienende Nutzstrahlungen, nämlich ulttaviolette (Wellenlänge 190 - 300 nm) bis sichtbare (400 - 750 nm) und bis infra= rote Nutzstrahlungen (800 - 2500 nm), im Bereich ihres Brennpunktes auf eine Fläche von höchstens 3,5 mm² bündelt;
- einer Stahlbüchse 23, welche das Eingangskopfstück 121 im geo= metrischen Brennpunkt der Linse 111 aufnimmt.

Die gegenseitige Lage der Linse 111 und des Eingangskopfstückes 121 des Faserbündels ist durch die Stahlbüchse 23 gesichert.

Zwei Fixierglieder 241 und 242 fixieren die Linse und das Kopfstück in der vorbestimmten Lage.

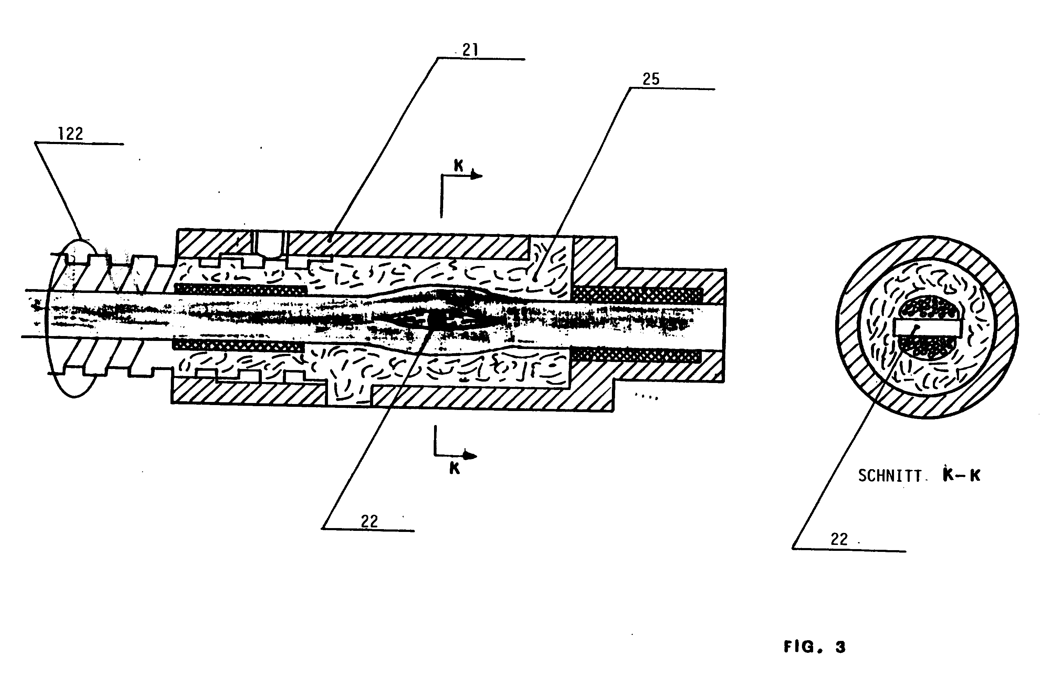

Der Aufbau des Eingangskopfstückes 121 ist im einzelnen in Fig. 3 dargestellt. Dieses Kopfstück ist derart aufgebaut, dass es Betriebstemperaturen von etwa 300 °C und Spitzentemperaturen von 450°C, sowie mechanische Belastungen aushalten kann, die auf eine in Fig. 1-A mit - α bis + α bezeichnete Schwenkung zurückzuführen sind. Die Schwenkung ist mit der Bewegung des Brennerkörpers starr gekuppelt, so dass zwischen dem Faserbündel 122 und der Schutzbüchse kein Schlupf entsteht. Durch diese Eigenschaft wird gewährleistet, dass die Endfläche des Faserbündels stets im Brennpunkt der Linse (Fig. 2) verbleibt und dauernd den höchstmöglichen Anteil der von der Flamme ausgestrahlten und von der Linse gesammelten Energie erhält.

Dies wird durch ein im kalten Zustand in das Innere des Faserbündels 122 eingefügtes Spreizglied 22 erzielt, das die Fasern voneinander entfernt und damit eine Stelle mit erweitertem Bündeldurchmesser bildet.

In den Zwischenraum zwischen dem derart verformten Faserbündel und der Halterungs- und Schutzbüchse 21 wird sodann ein flüssiges schnellhär= Bindemittel 25 unter Druck eingegossen, welches nach erfolgter Erstarrung das Faserbündel in der gewünschten Lage fixiert und dabei gleichzeitig den obenerwähnten Schlupf verhindert.

Die Übertragung der Strahlungen erfolgt über das genannte Lichtleitfaserbündel 122.

Die auf dem Markt erhältlichen Lichtleitfasern weisen je nach der Wellenlänge der Strahlungen unterschiedliche Strahlungsausbeuten auf und dementsprechend wird das Faserbündel mit solchen Fasern aufgebaut, deren Eigenschaften in Abhängigkeit von den wunschgemäss auszuwertenden Wellenlängen entweder einander gleich oder voneinander verschieden sind.

Im vorliegenden Ausführungsbeispiel kommen unterschiedliche Lichtleitfasertypen zur Übertragung von ultravioletten bzw. sichtbaren bzw. infraroten Lichtsignalen zur Anwendung.

Auf diese Weise erhält man eine erste Trennung der Strahlungen.

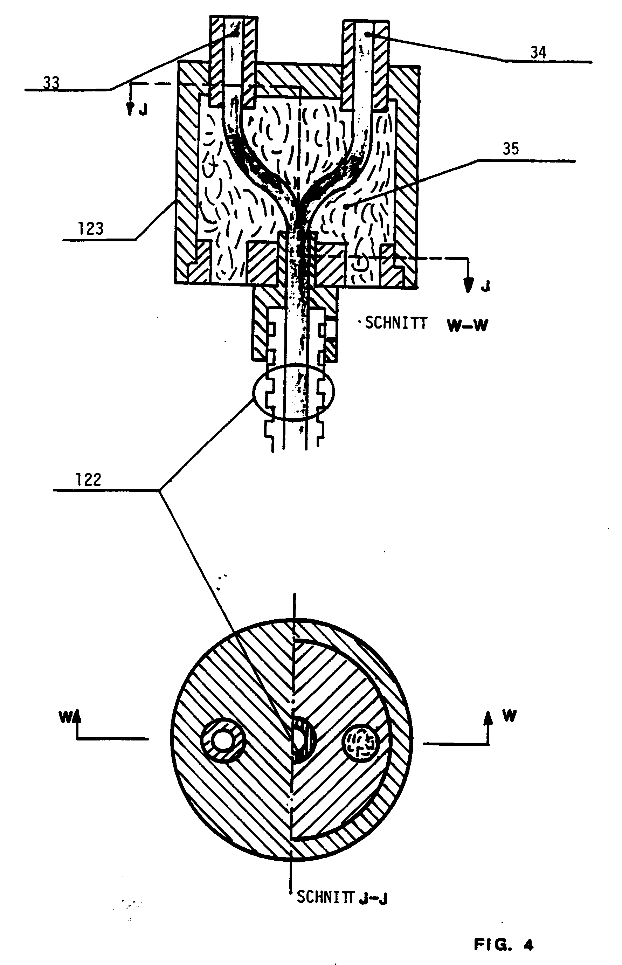

Die Trennung der Fasern mit unterschiedlicher Lichtleitfähigkeit erfolgt am ausgangsseitigen Ende des Faserbündels (Fig. 4), das zum Einsatz bei der Umgebungstemperatur bestimmt ist.

Damit die Trennung der Fasern und gleichzeitig deren mechanische Fixierung erzielt wird, ist ein zylinderförmiger metallischer Hohlkörper 123 (Fig. 4) vorgesehen, in dessen Boden Öffnungen vorgesehen sind. Letztere dienen zur Aufnahme der einzelnen Bestandteile des Lichtleitfaserbündels (wovon zwei Bestandteile mit 33 bzw. 34 bezeichnet sind) mit jeweils untereinander homogenen Fasern und von Bestandteil zu Bestandteil unterschiedlicher Lichtleitfähigkeit.

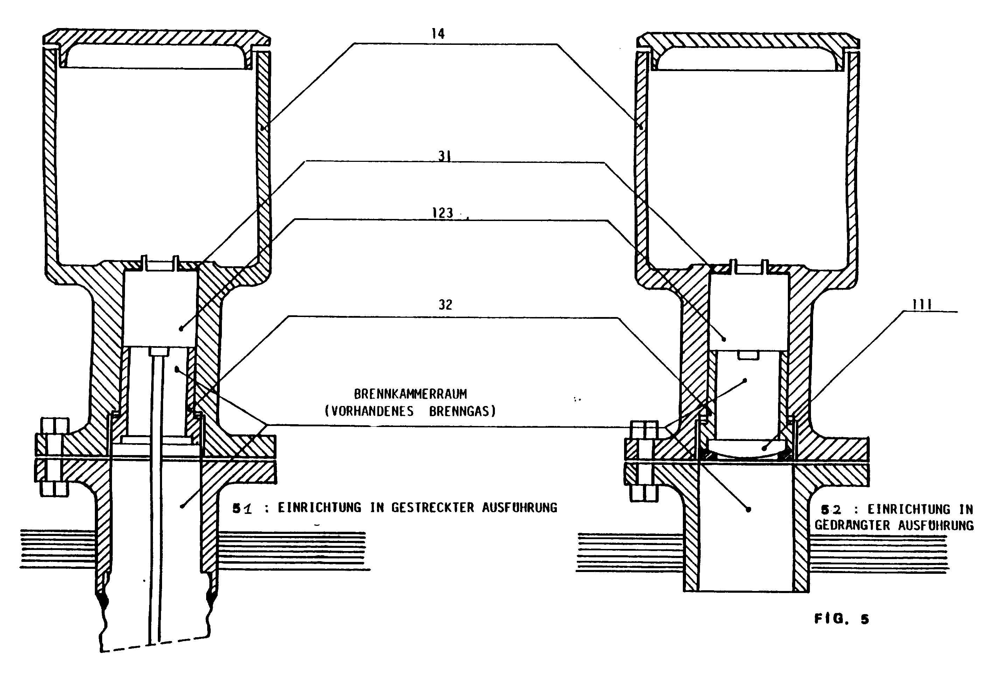

Das zur optischen Trennung vorgesehene Trennelement 123 dient auch zum Absperren der Brenngase, die sonst aus dem Inneren der Brennkammer in den Behälter 14 (Fig. 5) gelangen könnten, welcher die Sensoren und die dazugehörigen Verstärkerschaltungen enthält.

Diese Absperrung verhindert eine Explosion von Brenngas im Inneren des Behälters 14.

Um dieses Ergebnis zu erzielen wird der zylindrische Hohlkörper 123 mit einem flüssigen schnellhärtenden Bindemittel 35 vollkommen gefüllt. Der die Lichtleitfasern aufnehmende und trennende Hohlkörper 123 wird somit zu einem zylindrischen Vollkörper.

Die vollkommene gasdichte Absperrung wird durch Einfügung einer elastischen Dichtung 31 (Fig. 5) zwischen dem Körper 123 und dem Behälter 14 erzielt.

Die Fixierung des Körpers 123 und der zugeordneten Dichtung 31 erfolgt mit Hilfe eines Gewinderinges 32.

## Patentansprüche

1. Einrichtung zum Nachweis der Anwesenheit und der Güte einer Flamme mit
- einem optischen Erfassungs- und Bündelungselement,
- einem optische Übertragungelement für die Strahlungen,
- einem zu der Trennung der Strahlungen und zur Abdichung dienenden Element,
- einem zur Messung und Auswertung der Strahlungen dienenden Element,
wobei das Erfassungselement (11) im wesentlichen aus einer Sammellinse besteht, welche die zur Bewertung der Verbrennung dienenden Nutzstrahlungen im Bereich ihres Brennpunktes bündelt, wo das Eingangskopfstück (121) eines das Übertragungselement (12) bildenden Lichtleitfaserbündels angeordnet und fixiert ist, wobei das Übertragungselement durch Lichtleitfasern gebildet ist, deren Strahlungsausbeuten den zur Auswertung bestimmten Wellenlängen angepasst sind und die am ausgangsseitigen Ende in einem Trennelement (123) voneinander getrennt sind, wobei das Trennelement durch einen metallischen Hohlkörper (123) gebildet ist, in welchen einerseits eine Öffnung zur Aufnahme des Lichtleitfaserbündels (122) und andererseits Öffnungen zur Aufnahme der einzelnen, getrennten Bestandteile (33, 34) des Bündels vorgesehen sind und wobei der Hohlraum des das Trennelement bildenden metallischen Hohlkörpers (123) mit einem flüssigen, darin erstarrten Bindemittel (35) gefüllt ist.

2. Einrichtung nach Anspruch 1, dadurch gekennzeichnet, daß die Linse (111) des Erfassungselementes (11) die der Bewertung der Verbrennung dienenden Nutzstrahlungen auf eine Fläche von höchstens 3, 5 mm² bündelt.

3. Einrichtung nach Anspruch 1, dadurch gekennzeichnet, daß im Inneren des Faserbündels, an dessen Eingangskopfstück (121), ein Spreizglied (22) eingefügt ist, welches die Fasern des Bündels voneinander entfernt.

4. Einrichtung nach Anspruch 3, dadurch gekennzeichnet, daß das Eingangskopfstück (121) des Bündels in einer äusseren Schutzbüchse (21) enthalten und geschützt ist und daß der Zwischenraum zwischen dem Eingangskopfstück (121) und der Schutzbüchse (21) mit einem flüssigen, darin erstarrten Bindemittel (25) gefüllt ist.

5. Einrichtung nach Anspruch 4, gekennzeichnet durch eine aus einer Stahlbüchse (23) bestehende Zusammenbauvorrichtung, in welcher die Aufnahmen für die Linse (111) und das Eingangskopfstück (121) vorgesehen sind.

6. Einrichtung nach Anspruch 1, dadurch gekennzeichnet, daß das Lichtleitfaserbündel (122) durch mindestens zwei von drei oder mehreren Fasertypen gebildet ist, die jeweils zur Übertragung von Lichtsignalen im ultraviolettern bzw. sichtbaren bzw. infraroten Bereich dienen.

## Claims

1. Device for detecting the presence and the quality of a flame, having
- an optical detecting and focusing element,
- an optical transmission element for the rays,
- an element which is used for separating the rays and for sealing, and
- an element for measuring and evaluating the rays,
with the detecting element (11) basically comprising a convex lens which focuses the active rays, which are used to assess the combustion, in the region of their focal point, where the entry-side head piece (121) of an optical fibre bundle which forms the transmission element (12) is arranged and fixed, with the transmission element being formed by optical fibres, the radiant yields of which are matched to the wavelengths intended for evaluation and which optical fibres are separated from each other on the exit-side end in a separating element (123), with the separating element being formed by a metallic hollow body (123), in which there are provided on the one hand an opening for receiving the optical fibre bundle (122) and on the other hand openings for receiving the individual, separated components (33, 34) of the bundle, and with the hollow space of the metallic hollow body (123) which forms the separating element being filled with a liquid binding agent (35) which sets therein.

2. Device according to claim 1, characterised in that the lens (111) of the detecting element (11) focuses the active rays, which are used to assess the combustion, onto an area of at most 3.5 mm².

3. Device according to claim 1, characterised in that inserted inside the fibre bundle, on the entry-side head piece (121) thereof, is an expansion element (22), which distances the fibres of the bundle from each other.

4. Device according to claim 3, characterised in that the entry-side head piece (121) of the bundle is contained and protected in an outer protective sleeve (21), and in that the interstice between the entry-side head piece (121) and the protective sleeve (21) is filled with a liquid binding agent (25) which sets therein.

5. Device according to claim 4, characterised by an assembly device which comprises a steel sleeve (23) and in which there are provided the receivers for the lens (111) and the entry-side head piece (121).

6. Device according to claim 1, characterised in that the optical fibre bundle (122) is formed by at least two of three or more fibre types, which each serve to transmit light signals in the ultraviolet range or the visible range or the infrared range respectively.

## Revendications

1. Dispositif d'identification de la présence et de la qualité d'une flamme, comprenant:
- un élément de détection et de focalisation optique,
- un élément de transmission optique pour les radiations,
- un élément servant à la séparation des radiations et à l'étanchéification,
- un élément servant à la mesure et à l'analyse des radiations,
l'élément de détection (11) étant formé essentiellement par une lentille collectrice qui focalise les radiations effectives servant à évaluer la combustion dans la région de son foyer, région où est situé et fixé l'élément de tête d'entrée (121) d'un faisceau de fibres optiques formant l'élément de transmission (12), l'élément de transmission étant formé par des fibres optiques dont les rendements radiochimiques sont adaptés aux longueurs d'onde définies en vue de l'analyse et qui sont séparées les unes des autres dans un élément de séparation (123) au niveau de l'extrémité située sur le côté de la sortie, l'élément de séparation étant formé par un corps creux métallique (123) dans lequel sont prévues, d'une part, une ouverture destinée à recevoir le faisceau de fibres optiques (122) et, d'autre part, des ouvertures destinées à recevoir les constituants séparés individuels (33, 34) du faisceau, et l'espace vide du corps creux métallique (123) formant l'élément de séparation étant rempli d'un liant liquide (35) solidifié à l'intérieur.

2. Dispositif selon la revendication 1, caractérisé en ce que la lentille (111) de l'élément de détection (11) focalise les radiations effectives servant à l'évaluation de la combustion sur une surface mesurant au maximum 3,5 mm².

3. Dispositif selon la revendication 1, caractérisé en ce qu'un élément écarteur (22) éloignant les fibres du faisceau les unes des autres est inséré à l'intérieur du faisceau de fibres, au niveau de son élément de tête d'entrée (121).

4. Dispositif selon la revendication 3, caractérisé en ce que l'élément de tête d'entrée (121) du faisceau est contenu dans une douille de protection (21) extérieure qui le protège, et en ce que l'espace intermédiaire entre l'élément de tête d'entrée (121) et la douille de protection (21) est rempli d'un liant liquide (25) solidifié à l'intérieur.

5. Dispositif selon la revendication 4, caractérisé par un assemblage formé par une douille en acier (23) dans laquelle sont prévus les logements pour la lentille (111) et l'élément de tête d'entrée (121).

6. Dispositif selon la revendication 1, caractérisé en ce que le faisceau de fibres optiques (122) est formé d'au moins deux types de fibres parmi trois ou plusieurs types servant respectivement à la transmission de signaux lumineux dans la gamme de lumière ultraviolette resp. visible resp. infrarouge.
